# EUROPÄISCHE PATENTSCHRIFT

(11) **EP 0 623 441 B1**
(45) Veröffentlichungstag und Bekanntmachung des Hinweises auf die Patenterteilung: **18.09.1996**
(21) Anmeldenummer: 94104466.1
(22) Anmeldetag: 22.03.1994
(51) Int. Cl.: B29C 43/24, B29C 43/28

(54) **Mehrzweckkalander**
Multipurpose calender
Calandre à usage multiple

(30) Priorität: 04.05.1993 DE 4314653
(43) Veröffentlichungstag der Anmeldung: 09.11.1994
(73) Patentinhaber: Paul Troester Maschinenfabrik, D-30519 Hannover (DE)
(72) Erfinder: Fromm, Gerald, Dipl.-Ing., D-30900 Wedemark (DE)
(74) Vertreter: Junius, Walther, Dr.

(56) Entgegenhaltungen:
- DE-A- 3 229 477
- DE-C- 893 260
- FR-A- 2 512 731
- GB-A- 1 048 485
- US-A- 1 793 612
- US-A- 3 274 308
- US-A- 4 306 927

## Beschreibung

Die Erfindung betrifft einen Kalander, in dessen Kalanderständern übereinander Zwei äußere Walzen und mindestens zwei innere, zwischen den beiden äußeren Walzen angeordnete Walzen versetzt zueinander gelagert sind, von denen die zwei äußeren Walzen durch Verstellmittel verschränkbar und durch weitere Verstellmittel verschiebbar sind, und von denen die eine innere Walze fest in den Kalanderständern gelagert ist, während die andere innere Walze durch Verstellmittel zur Einstellung der Walzenspaltweite verschiebbar ist, wobei die Lagergehäuse der verschiebbaren inneren Walze in langlochartig ausgebildeten Führungen der Kalanderständer verschiebbar sind und wobei die an den Lagergehäusen der äußeren verschränkbaren, verschiebbaren Walzen angreifenden Verstellmittel in senkrecht zueinander stehenden Richtungen wirken.

Ein derartiger Kalander ist aus der DE-PS 19 25 261 in einer vereinfachten Ausführungsform bekannt geworden, bei der die Walzenachsen in einer Vertikalebene übereinander angeordnet sind. Dieser bekannte Kalander dient dem beidseitigen Belegen eines Gewebes mit einer Kautschukschicht. Um den Walzenspalt in der Mitte der vier Walzen, in den sowohl das Gewebe als auch die beiden Beläge einlaufen, in seiner Spaltweite genügend variieren zu können, ohne die Möglichkeit einer Verschränkung der äußeren Walzen zu verlieren, ist von den beiden inneren Walzen die eine mit ihren Lagern fest in den Kalanderständern gelagert, während die andere mit der ihr zugeordneten äußeren Walze in großen und sehr schweren Kulissen gelagert sind, die in den Kalanderständern motorisch verschiebbar gelagert sind. In jeder Kulisse ist eine weitere Kulisse durch motorische Kräfte verschiebbar gelagert, in welcher die der verschiebbaren inneren Walze zugeordnete äußere Walze gelagert ist. Die Herstellung dieses Kalanders ist durch die beiden Kulissen sehr teuer und aufwendig.

Durch offenkundige Vorbenutzung ist ein weiterer in gleicher Weise aufgebauter und in gleicher Weise arbeitender, ebenfalls mit zwei Kulissen ausgestatteter Kalander bekannt geworden, dessen Walzenachsen auch übereinander, jedoch nicht in einer vertikalen Ebene angeordnet sind. Die Walzenachsen liegen paarweise in zwei spitzwinklig zur Vertikalen verlaufenden Ebenen. Dieser Kalander weist die gleichen Nachteile eines hohen Bauaufwandes und hoher Anschaffungskosten wegen der zwei sehr schweren Kulissen auf. Aber nicht nur die schweren Kulissen sind von Nachteil, ihr Vorhandensein zieht es nach sich, daß auch die Kalanderständer sehr viel schwerer als sonst bei Vierwalzenkalandern üblich ausgeführt werden müssen. Das wiederum zieht die Notwendigkeit festerer und aufwendigerer Fundamente sowie die Notwendigkeit des Einsatzes stärkerer Transportmittel und schwerer Hebemittel beim Aufstellen nach sich.

Ohne Kulissen für die Lagerung zweier Kalanderwalzen gebaute Mehrwalzen-Kalander sind in großer Vielzahl bekannt geworden, diese dienen aber nur jeweils einem Zweck:
Zu Herstellung von Folien dienen Vierwalzenkalander nach der US-A-32 74 308, der DE-C-893 260, der GB-C-10 48 485 und der DE-A-32 29 477.
Der doppelseitigen Beschichtung von Geweben die Kalander der US-A-17 93 612, der US-A-43 06 927 und der FR-A-25 12 731.
Bei diesen Kalandern sind einzelne Walzen verschiebbar angeordnet, eine Möglichkeit der Walzenverschränkung weisen sie alle nicht auf.

Die Erfindung vermeidet die Nachteile des Standes der Technik. Es ist die Aufgabe der Erfindung, mit einfachen Mitteln und in einfacher Weise einen universell einsetzbaren Kalander von geringem Gewicht zu schaffen, der ebenso zum ein- und beidseitigen Belegen einer Materialbahn, z.B. eines Gewebes, mit einer Kautschukschicht von kleinen bis großen Dicken geeignet und bestimmt ist, jedoch durch den Fortfall der großen Kulissen billiger in der Anschaffung, leichter von Gewicht und leichter bedienbar ist.

Die Erfindung besteht in der parallelen Anordnung der Verschieberichtung der verschiebbaren inneren Walze zu der Verschieberichtung der ihr zugeordneten verschieb- und verschränkbaren äußeren Walze und in der über die Verschränkmöglichkeit hinausgehende Verschiebemöglichkeit dieser äußeren Walze um den Weg und die Richtung der beweglichen inneren Walze um zumindest einen für das Beschichten der Warenbahn erforderlichen Abstand der inneren verstellbaren Walze von der inneren festgelagerten Walze.

Dieser Kalander kann die notwendigen Walzenverstellungen ohne die schweren, zwei der vier Walzen lagernden Kulissen auch bei Produkten von erheblicher Dicke ausführen, der ganze Kalander läßt sich durch den Fortfall der Kulissen und durch in leichterer Bauart herstellbare Ständer erheblich in seinem Gewicht und in seinen Anschaffungskosten reduzieren.

Es ist ein besonderer Vorteil dieses Kalanders, daß er als Mehrzweckkalander einsetzbar ist, daß der Kalander sowohl für das Kalandrieren eines bahnförmigen Produktes in drei Walzenspalten als auch für das Doublieren zweier Warenbahnen als auch für das ein- und beidseitige Beschichten oder Kaschieren einer zugeführten Warenbahn sowie das Friktionieren von Geweben einsetzbar ist, aber auch für die Herstellung von Folien und Bahnen geeignet ist.

Für die leichte Bedienung dieses Kalanders ist es vorteilhaft, eine Steuerungsvorrichtung mit zwei Steuerungsmöglichkeiten für die gleiche und vorzugsweise auch gleichmäßige Verschiebung der beiden Lagergehäuse der der verschiebbaren mittleren Walze zugeordneten äußeren Walze vorzusehen:
Eine Möglichkeit der Verschiebung des einen Lagergehäuses in Gegenrichtung zur Verschiebung des anderen Lagergehäuses um gleiche Weglängen für eine Walzenverschränkung und eine weitere Möglichkeit der Verschiebung beider Lagergehäuse dieser einen äußeren Walze in gleicher Richtung um gleiche Weglängen für eine parallele Walzenverschiebung.

Ein einfacher Aufbau dieses Kalanders läßt sich dadurch erreichen, daß die in den Kalanderständern angeordneten Führungen für die Träger der Lagergehäuse derjenigen äußeren Walze, die der verschiebbaren inneren Walze benachbart ist, senkrecht zu der Führung der verschiebbaren inneren Walze verläuft, daß die Verschieberichtung dieser äußeren Walze für deren Verschränkung parallel zu der Führung der verschiebbaren inneren Walze verläuft, wobei die Führungen unter einem spitzen Winkel gegenüber der Horizontalen und der Vertikalen angeordnet sind, und daß die parallel zur Führung der inneren verschiebbaren Walze verlaufende Verschiebemöglichkeit weiter als für die Verschränkung notwendig, nämlich auch für eine zusätzliche Walzenverschiebung parallel zu sich selbst ausgelegt ist, und zwar so weit, daß der für das Beschichten der Warenbahn erforderliche Abstand der inneren verstellbaren Walze von der inneren festgelagerten Walze einstellbar ist. Zusätzlich ist für die Notöffnung des Walzenspaltes bei der verstellbaren inneren Walze eine zusätzliche Hubstrecke zu berücksichtigen.

Dieser Kalander läßt sich in mehreren Ausführungsformen realisieren.

Eine mögliche Ausführungsform besteht darin, daß die Lagergehäuse der verschränkbaren und verschiebbaren Walze in langlochartig ausgebildeten Führungen von Trägern verschiebbar sind, die ihrerseits in langlochartig ausgebildeten Führungen verschiebbar sind, wobei die Führungen in den Trägern senkrecht zu den Führungen in den Kalanderständern verlaufen.

Eine andere weniger Bauraum benötigende Ausführungsform besteht darin, daß die parallel zu den Führungen der inneren verschiebbaren Walze wirkenden Verstellvorrichtungen für die Lagergehäuse der ihr benachbarten äußeren Walze in den Kalanderständern befestigt sind und zwischen sich die Lagergehäuse einspannen.

Für den Betrieb des Kalanders, insbesondere bei dessen Einrichtung für die Herstellung eines Produktes, ist es vorteilhaft, wenn eine Steuerungsvorrrichtung vorgesehen ist, mit der die beiden in ihren parallel zueinander verlaufenden Führungen verschiebbaren benachbarten Lagergehäuse der Walzen gleichzeitig und parallel verschiebbar sind und die einzelnen Arbeitspositionen der Walzen reproduzierbar sind.

Bei der erfindungsgemäßen Bauweise ist es an sich zweckmäßig, daß die Führungen in den Trägern länger als die parallel zu ihnen verlaufenden Führungen in den Kalanderständern sind. Jedoch muß für die Notöffnung des Walzenspaltes die verschiebbare innere Walze so weit verschoben werden können, daß deren Führungen in der Praxis länger sind.

Für die Konstruktion dieses Kalanders ist es zweckmäßig, wenn die Achse der beweglichen mittleren Walze in einer schrägen Ebene so einstellbar ist, daß sie in ihrer Endstellung in der durch die Achse der fest gelagerten mittleren Walze verlaufenden vertikalen Ebene liegt, während die Achsen der äußeren Walzen und der ihnen benachbarten mittleren Walzen jeweils in einer schrägen, unter einem spitzen Winkel zur Vertikalen verlaufenden Ebene angeordnet sind.

Das Wesen der Erfindung ist nachstehend anhand von in den Zeichnungen schematisch dargestellten Ausführungsbeispielen näher erläutert. Es zeigen:
- Fig.1: den Kalander in seinem Aufbau
- Fig.2: einen anderen Kalander mit einer einfacheren Lagerverschiebbarkeit
- Fig.3: die Schränk- und Verschiebevorrichtung dieses Kalanders
- Fig.4: einen Schnitt durch diese Vorrichtung
- Fig.5: den Kalander beim Herstellen einer dünnen Bahn,
- Fig.6: den Kalander beim Doublieren zweier Warenbahnen
- Fig.7: den Kalander beim beidseitigen Belegen einer mittig zugeführten Warenbahn mit je einer Kautschukschicht.
- Fig.8: den Kalander beim einseitigen Friktionieren einer mittig zugeführten Warenbahn
- Fig.9: den Kalander beim beidseitigen Belegen (einkleiden) einer unter der untersten Walze zugeführten Warenbahn.

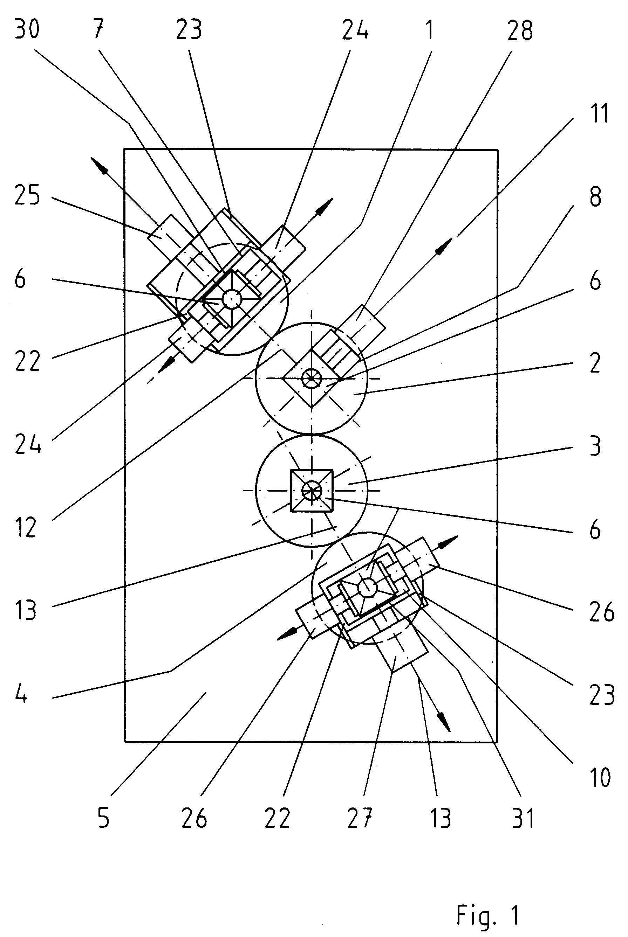

Die Zeichnung Fig.1 zeigt einen Kalander, in dessen Kalanderständern 5 übereinander zwei äußere Walzen 1,4 und zwei innere, in der Mitte zwischen den beiden äußeren Walzen 1,4 angeordnete Walzen 2,3 versetzt zueinander gelagert sind, von denen die zwei äußeren Walzen 1,4 durch Verstellmittel 24,26 verschränkbar und durch weitere Verstellmittel 25,27 verschiebbar sind. Die eine innere Walze 3 ist fest in den Kalanderständern 5 gelagert, während die andere innere Walze 2 durch Verstellmittel 28 verschiebbar ist. Die Lagergehäuse 6 der verschiebbaren inneren Walze 2 sind in langlochartig ausgebildeten Führungen 8 der Kalanderständer 5 verschiebbar und die Lagergehäuse 6 der äußeren verschränkbaren und verschiebbaren Walzen 1,4 sind in langlochartig ausgebildeten Führungen 7,10 von Trägern 22 verschiebbar, die ihrerseits in langlochartig ausgebildeten Führungen 23 in den Kalanderständern 5 verschiebbar sind. Die in den beiden Ständern 5 des Kalanders angeordneten Führungen 23 der Träger 22 verlaufen senkrecht zu den Führungen 7,10 innerhalb der Träger 22.

Für die Erfindung ist es wesentlich, daß die in den Kalanderständern 5 angeordneten Führungen 23 für die Träger 22 der Lagergehäuse 6 derjenigen äußeren Walze 1, die der verschiebbaren inneren Walzen 2 benachbart ist, senkrecht zu der Führung 8 der verschiebbaren inneren Walze 2 verläuft und daß die Führung 23 im dieser äußeren Walze 1 zugeordneten Träger 22 parallel zu der Führung 8 der verschiebbaren inneren Walze verläuft. Die Führungen 7,8,23 sind unter einem spitzen Winkel gegenüber der Horizontalen und der Vertikalen angeordnet. Die parallel zur Führung 8 der inneren verschiebbaren Walze 2 verlaufenden, an den Trägern 22 angeordneten Führungen 7,36 sind so lang, daß der für das Beschichten der Warenbahn 9 bzw 18 erforderliche Abstand der inneren verstellbaren Walze 2 von der inneren festgelagerten Walze 3 und die Verschränkung einstellbar sind.

Als Verstellmittel dienen z.B. Spindeln oder Hydraulik-Kolben-Zylinder-Einheiten.

Die langlochartig ausgebildeten Führungen 7 in den Trägern 22 und 8 in den Kalanderständern für die Lagergehäuse 6 dieses einen Paares verschiebbarer benachbarter Walzen 1,2 verlaufen parallel zueinander unter einem spitzen Winkel gegenüber der Horizontalen und der Vertikalen. Die Führung ist so lang, daß der für das Beschichten der Warenbahn 9 bzw 18 erforderliche Abstand der inneren verstellbaren Walze 2 von der inneren festgelagerten Walze 3 einstellbar und der notwendige Walzenspalt bei Notschaltung gewährleistet ist.

Weiter ist es vorteilhaft, wenn eine Steuerungsvorrichtung vorgesehen ist, mit der die beiden in den Schrägführungen 7,8 verschiebbaren benachbarten Walzen 1,2 gleichzeitig und parallel verschiebbar sind.

Die Lagergehäuse 6 der äußeren Walze 4 sind in Führungen 10 verschiebbar, deren Richtung nicht parallel zu den Führungen 7,8 zu verlaufen braucht.

Bei diesem Kalander ist die Achse der mittleren Walze 2 in einer schrägen Ebene 11 verstellbar, und zwar bis zu einer durch die Achse der festen Walze 3 verlaufenden vertikalen Ebene. Die Achsen der äußeren Walzen 1,4 und der der äußeren Walze 1 benachbarten mittleren Walze 2 sind jeweils in einer schrägen, unter einem spitzen Winkel zur Vertikalen verlaufenden Ebene 12, 13 angeordnet.

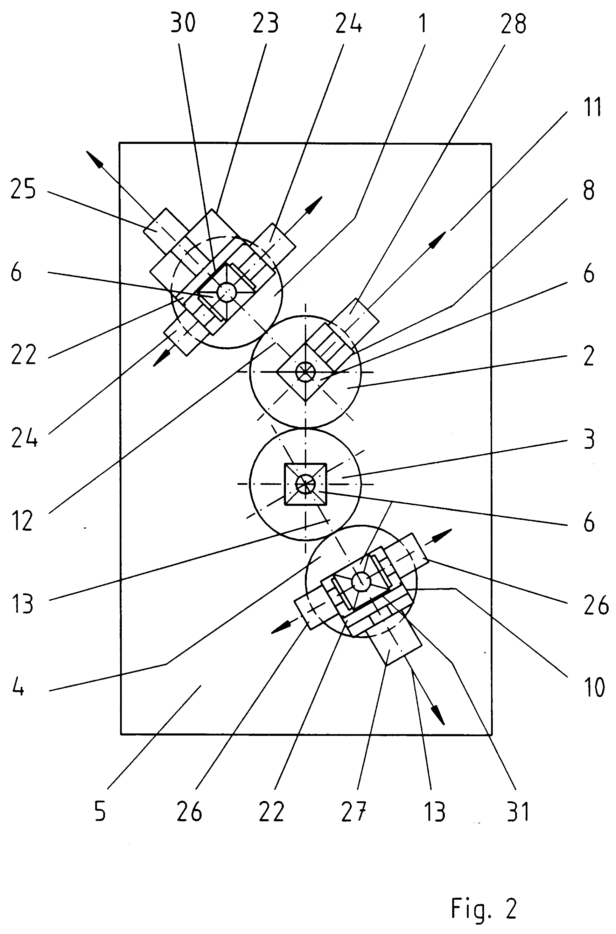

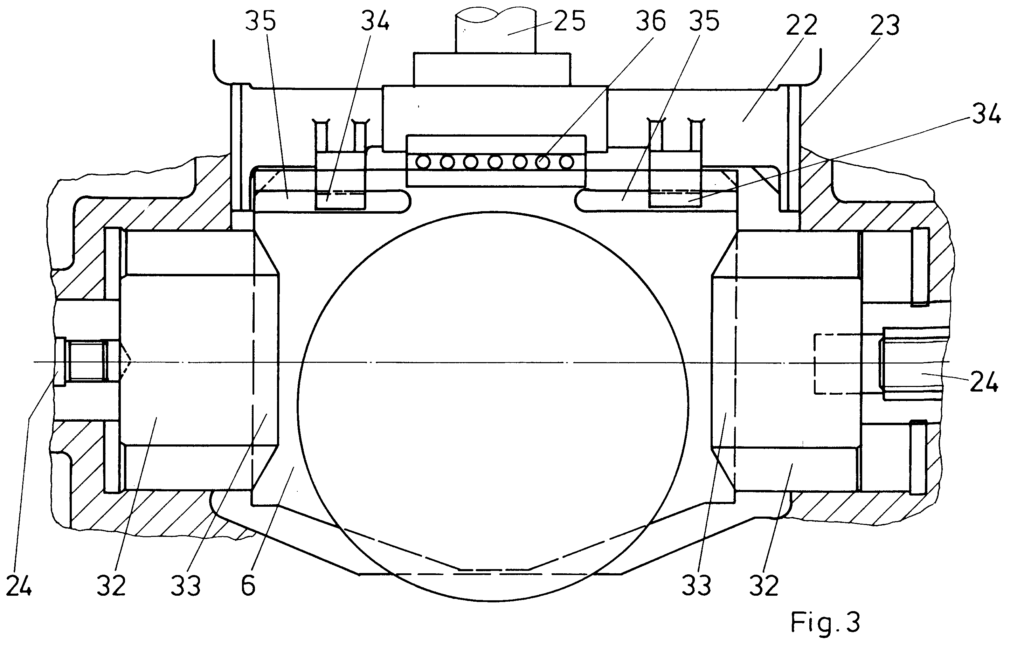

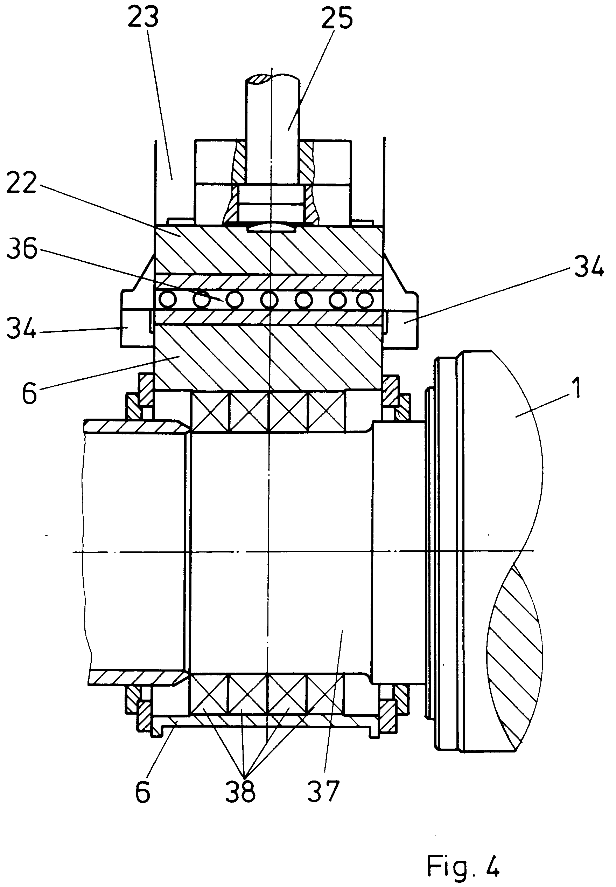

Im Ausführungsbeispiel der Fig.2 sind die Verstellmittel 24 für die Walzenschränkung und -verschiebung der Walze 1 in den Kalanderständern 5 befestigt und die Lagergehäuse 6 sind zwischen den Verstellmitteln eingespannt verschiebbar. Dadurch können die Träger 22 kleiner und leichter gestaltet werden. Diese Ausführungsform ist konstruktiv in den Fig. 3 und 4 dargestellt.

Das Lagergehäuse 6 ist in dieser Ausführungsform von zwei Führungsbacken 32 eingespannt, welche von Verschiebemitteln 26 unter Spannung gehalten und verschoben werden. Das Lagergehäuse 6 ist im Bereich der angreifenden Führungsbacken konvex gestaltet, die Führungsbacken mit gleichem Radius konkav, so daß sie eine Drehung des Lagergehäuses 6 in einem bestimmten Winkelbereich, der für die Walzenschränkung notwendig ist, zulassen. Die Achse dieser konvexen und konkaven Flächen 33 verläuft parallel zur Achse der Verstellvorrichtung 25. Dadurch ist es möglich, ohne Verstellung der Verstellmittel 26 das Lagergehäuse durch das Verstellmittel 25 zu verschieben.

Das Lagergehäuse 6, durch das sich der Walzenlagerzapfen 37 mit den Wälzlagern 38 erstreckt, ist an das Verstellmittel 25 über Führungen in Form von Haken 34, die in Nuten 35 eingreifen, angekoppelt und parallel zur Führung 8 verschiebbar. Ein Flachwälzlager 36 (dieses kann auch als Flachgleitlager ausgeführt sein), erleichtert die Verschiebung des Lagergehäuses 6 bei den erheblichen Belastungen durch den Walzenspaltdruck. Dieses Flachlager 36 übernimmt hier die Aufgabe der Führung 30.

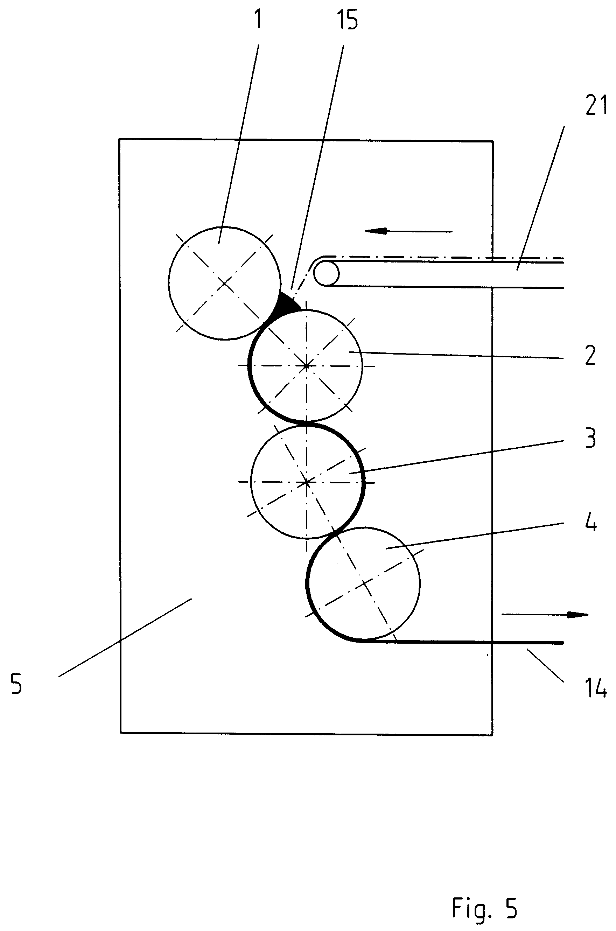

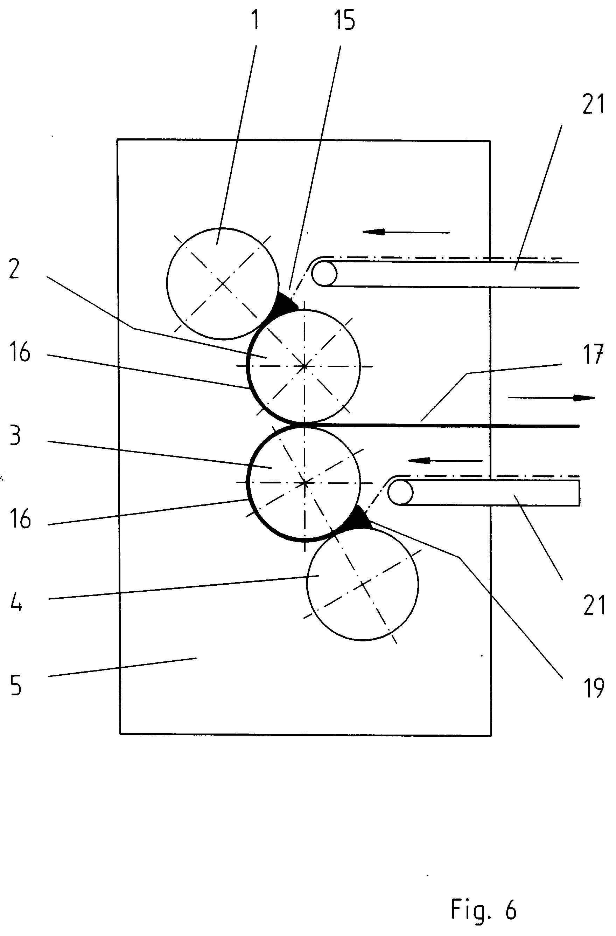

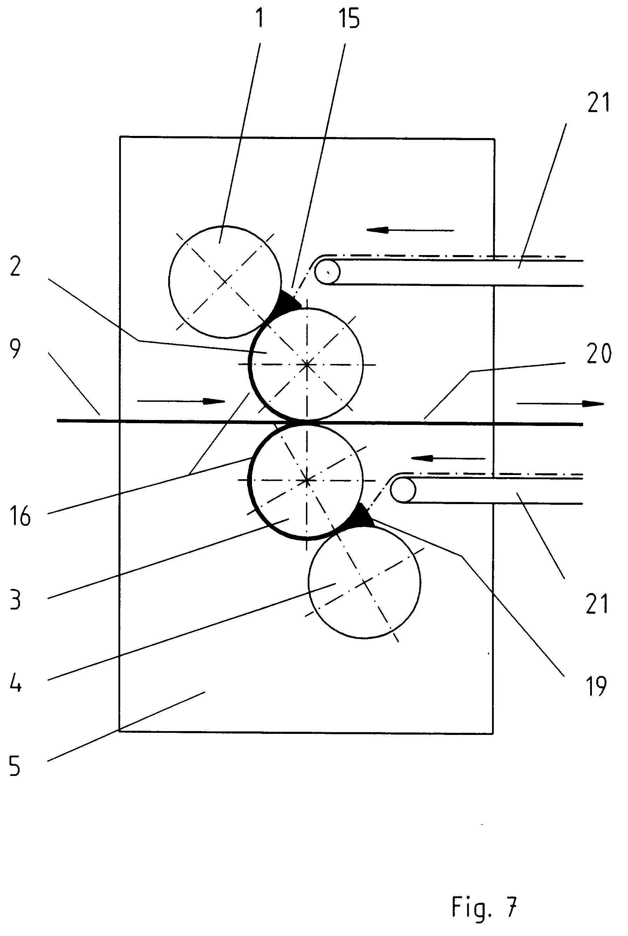

Dieser Kalander ist, wie Fig. 5 zeigt, sowohl für das Kalandrieren eines bahnförmigen Produktes 14 in drei Walzenspalten geeignet, wobei das zu verarbeitende Material 15 in den Walzenspalt zwischen den Walzen 1 und 2 aufgegeben wird, als auch für das Dublieren von zwei separat von den Materialkneten 15 und 19 her erzeugten Materialbahnen 16 zu einem Produkt 17 entsprechend Fig. 6. Eine weitere Anwendung zeigt das Ausführungsbeispiel Fig. 7. Hier werden ebenfalls von den Materialkneten 15 und 19 her erzeugte Materialbahnen 16 im Walzenspalt zwischen den Walzen 2 und 3 auf eine dort von außen zugeführte Warenbahn 9 aufgelegt bzw. kaschiert, dabei entsteht das Produkt 20.

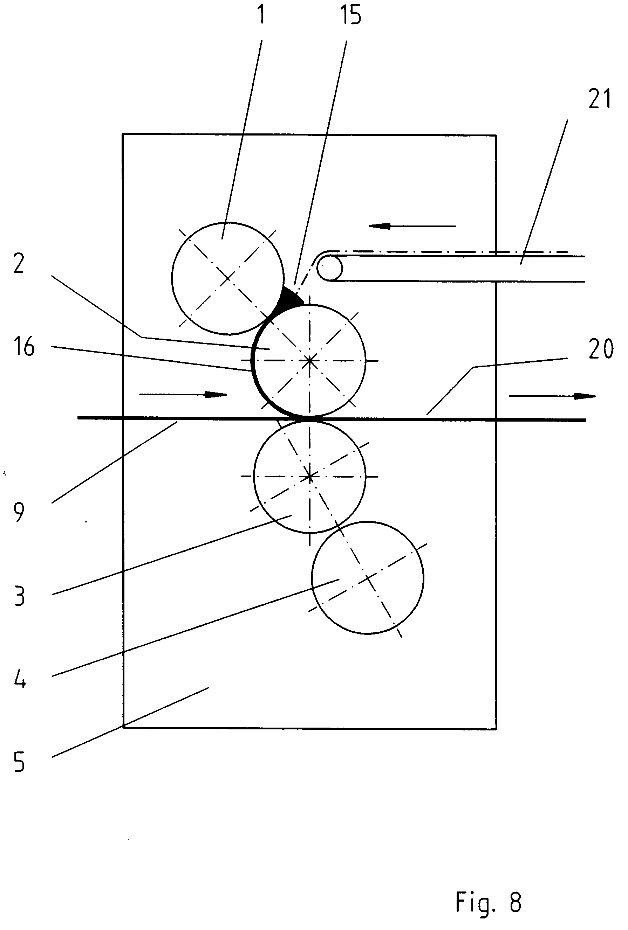

Fig. 8 zeigt ein weiteres Anwendungsbeispiel, bei dem eine vom Materialknet 15 erzeugte Materialbahn einseitig auf die zugeführte Warenbahn 9 aufgelegt bzw. friktioniert wird.

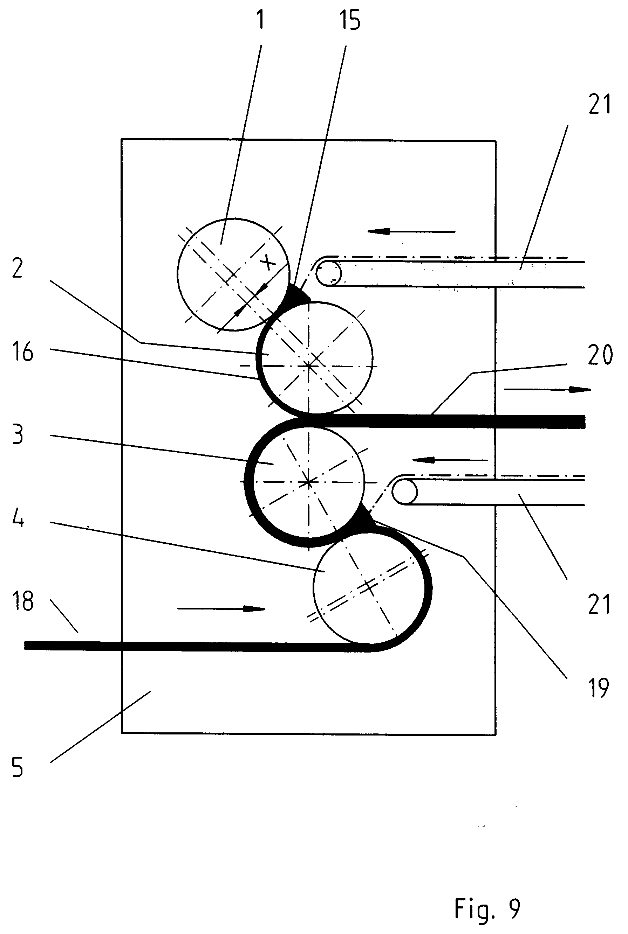

In Fig. 9 wird dargestellt, wie eine unter Walze 4 zugeführte Warenbahn 18 im Spalt zwischen den Walzen 3 und 4 durch einen Materialknet 19 einseitig beschichtet bzw. eingekleidet wird. Beim weiteren Durchlauf der Warenbahn durch den Kalander wird deren andere Seite im Spalt zwischen den Walzen 2 und 3 mit einer vom Materialknet 15 erzeugten Materialbahn 16 belegt.

Die Erfindung erreicht somit die universelle Nutzbarkeit des Kalanders in höchst einfacher Weise durch eine bestimmte Anordnung und Dimensionierung einiger Bauteile des Kalanders, nämlich durch die parallele Anordnung der Verschieberichtung der verschiebbaren mittleren Walze zu der Verschieberichtung der ihr zugeordneten verschieb- und verschränkbaren äußeren Walze und durch die über die Verschränkmöglichkeit hinausgehende parallele Verschiebemöglichkeit dieser äußeren Walze.

Dabei ist es vorteilhaft, wenn zwei Steuerungsmöglichkeiten für die gleiche und vorzugsweise auch gleichmäßige Verschiebung der beiden Lager der der verschiebbaren mittleren Walze zugeordneten äußeren Walze vorgesehen sind:
Eine Möglichkeit der Verschiebung des einen Lagers in Gegenrichtung zur Verschiebung des anderen Lagers um gleiche Weglängen zur Erzielung der Verschränkung und eine weitere Möglichkeit der parallelen Verschiebung beider Lager in gleicher Richtung um gleiche Weglängen.

## Patentansprüche

1. Kalander, in dessen Kalanderständern (5) übereinander zwei äußere Walzen (1,4) und mindestens zwei innere, in der Mitte zwischen den beiden äußeren Walzen angeordnete Walzen (2,3) versetzt zueinander gelagert sind, von denen die zwei äußeren Walzen durch Verstellmittel (24,26) verschränkbar und durch weitere Verstellmittel (25,27) verschiebbar sind, und von denen die eine innere Walze (3) fest in den Kalanderständern (5) gelagert ist, während die andere innere Walze (2) durch Verstellmittel zur Einstellung der Walzenspaltweite verschiebbar ist, wobei die Lagergehäuse (6) der verschiebbaren inneren Walze in langlochartig ausgebildeten Führungen (8) der Kalanderständer verschiebbar sind und wobei die an den Lagergehäusen (6) der äußeren verschränkbaren, verschiebbaren Walzen (1,4) angreifenden Verstellmittel in senkrecht zueinander stehenden Richtungen wirken,
gekennzeichnet
durch die parallele Anordnung der Verschieberichtung der verschiebbaren inneren Walze (2) zu der Verschieberichtung der ihr zugeordneten verschieb- und verschränkbaren äußeren Walze (1) und durch die über die Verschränkmöglichkeit hinausgehende Verschiebemöglichkeit dieser äußeren Walze um zumindest einen für das Beschichten der Warenbahn (9,18) erforderlichen Abstand der inneren verstellbaren Walze (2) von der inneren fest gelagerten Walze (3).

2. Kalander nach Anspruch 1,
gekennzeichnet durch eine Steuerungsvorrichtung mit zwei Steuerungsmöglichkeiten für die gleiche und vorzugsweise auch gleichmäßige Verschiebung der beiden Lagergehäuse (6) der der verschiebbaren inneren Walze (2) zugeordneten äußeren Walze (1):
Eine Möglichkeit der Verschiebung des einen Lagergehäuses(6) in Gegenrichtung zur Verschiebung des anderen Lagergehäuses (6) um gleiche Weglängen und eine weitere Möglichkeit der parallelen Verschiebung beider Lagergehäuse (6) in gleicher Richtung um gleiche Weglängen.

3. Kalander nach Anspruch 1,
dadurch gekennzeichnet,
daß die in den Kalanderständern (5) angeordneten Führungen (23) für die Träger (22) der Lagergehäuse (6) derjenigen äußeren Walze (1), die der verschiebbaren inneren Walzen (2) benachbart ist, senkrecht zu der Führung (8) der verschiebbaren inneren Walze (2) verläuft
daß die Verschieberichtung dieser äußeren Walze (1) für deren Verschränkung parallel zu der Führung (8) der verschiebbaren inneren Walze verläuft,
wobei die Führungen (7,8) unter einem spitzen Winkel gegenüber der Horizontalen und der Vertikalen angeordnet sind,
und daß die parallel zur Führung (8) der inneren verschiebbaren Walze (2) verlaufende Verschiebemöglichkeit weiter als für die Verschränkung notwendig, nämlich auch für eine zusätzliche zu sich selbst parallele Walzenverschiebung ausgelegt ist, und zwar so weit, daß der für das Beschichten der Warenbahn (9,18) erforderliche Abstand der inneren verstellbaren Walze (2) von der inneren festgelagerten Walze (3) einstellbar ist.

4. Kalander nach Anspruch 1 und 3,
dadurch gekennzeichnet,
daß die Lagergehäuse (6) der verschränkbaren und verschiebbaren Walze (1) in langlochartig ausgebildeten Führungen (7) von Trägern (22) verschiebbar sind, die ihrerseits in langlochartig ausgebildeten Führungen (23) in den Kalanderständern (5) verschiebbar sind, wobei die Führungen (7) in den Trägern (22) senkrecht zu den Führungen (23) in den Kalanderständern (5) verlaufen.

5. Kalander nach Anspruch 1 und 3,
dadurch gekennzeichnet,
daß die parallel zur Führung (8) wirkenden Verstellvorrichtungen (24) für die Lagergehäuse (6) der der inneren verschiebbaren Walze 2 zugeordneten äußeren Walze (1) in den Kalanderständern (5) befestigt sind und zwischen sich die Lagergehäuse (6) einspannen.

6. Kalander nach Anspruch 1,
dadurch gekennzeichnet,
daß die verschiebbare innere Walze (2) in schräg angeordneten Führungen verschiebbar ist und in ihrer einen Endstellung in eine durch die Achse der fest gelagerten inneren Walze (3) verlaufenden vertikalen Ebene (11) einstellbar ist, während die äußeren Walzen (1,4) in schrägen, unter einem spitzen Winkel zur Vertikalen verlaufenden Ebenen verschiebbar sind.

7. Kalander nach Anspruch 1,
dadurch gekennzeichnet,
daß der Kalander sowohl für das Kalandrieren eines bahnförmigen Produktes (14) in drei Walzenspalten als auch für das Doublieren zweier Warenbahnen als auch für das ein- und beidseitige Beschichten oder Kaschieren einer zugeführten Warenbahn (9,18) sowie für das Friktionieren von Geweben einsetzbar ist.

8. Kalander nach Anspruch 1,
dadurch gekennzeichnet,
daß die Stellglieder (24) für die Walzenschränkung in ihrer Länge nicht nur für die Walzenschränkung, sondern darüber hinaus auch für eine Verschiebebewegung der Walze (1) parallel zu sich selbst ausgelegt sind.

9. Kalander nach Anspruch 1,
dadurch gekennzeichnet,
daß die parallel zur Führung der inneren verschiebbaren Walze verlaufende Verschiebemöglichkeit weiter als für die Verschränkung notwendig, nämlich auch für eine zusätzliche Walzenverschiebung parallel zu sich selbst ausgelegt ist, und zwar so weit, daß der für das Beschichten der Warenbahn erforderliche Abstand der inneren verstellbaren Walze von der inneren festgelagerten Walze einstellbar ist.

10. Kalander nach Anspruch 9,
dadurch gekennzeichnet,
daß für die Notöffnung des Walzenspaltes bei der verstellbaren inneren Walze eine zusätzliche Hubstrecke vorgesehen ist.

## Claims

1. Calender in whose calender uprights (5) two outer rolls (1, 4) and at least two inner rolls (2, 3) disposed in the middle between the two outer rolls are mounted above one another offset in relation to one another, of which the two outer rolls are traversable by adjusting means (24, 26) and displaceable by further adjusting means (25, 27), and of which one inner roll (3) is mounted in a fixed position in the calender uprights (5) while the other inner roll (2) is displaceable by adjusting means to set the roll gap width, the bearing housings (6) of the displaceable inner roll being displaceable in slot-like guides (8) of the calender uprights and the adjusting means acting on the bearing housings (6) of the outer traversable displaceable rolls (1, 4) acting in directions at right angles to one another, characterised by the parallel arrangement of the direction of displacement of the displaceable inner roll (2) to the direction of displacement of the displaceable and traversable outer roll (1) associated with it, and by the displacement possibility of this outer roll going beyond the traversing possibility by at least the distance between the inner adjustable roll (2) and the inner fixed roll (3) necessary for coating the web of material (9, 18).

2. Calender according to claim 1, characterised by a control device with two control possibilities for the same and preferably also uniform displacement of the two bearing housings (6) of the outer roll (1) associated with the displaceable inner roll (2): one possibility of displacement of one bearing housing (6) in the opposite direction to the displacement of the other bearing housing (6) by equal linear amounts and a further possibility of parallel displacement of both bearing housings (6) in the same direction by equal linear amounts.

3. Calender according to claim 1, characterised in that the guides (23) disposed in the calender uprights (5) for the carriers (22) of the bearing housings (6) of the outer roll (1) which is next to-the displaceable inner roll (2) run at right angles to the guide (8) of the displaceable inner roll (2), in that the direction of displacement of this outer roll (1) for its traversing runs parallel to the guide (8) of the displaceable inner roll, the guides (7, 8) being disposed at an acute angle relative to the horizontal and the vertical, and in that the displacement possibility running parallel to the guide (8) of the inner displaceable roll (2) extends further than necessary for the traversing, namely also for an additional displacement of the roll parallel with itself, so that the distance between the inner adjustable roll (2) and the inner fixed roll (3) necessary for coating the web of material (9, 18) is adjustable.

4. Calender according to claim 1 and 3, characterised in that the bearing housings (6) of the traversable and displaceable roll (1) are displaceable in slot-like guides (7) of carriers (22) which for their part are displaceable in slot-like guides (23) in the calender uprights (5), the guides (7) in the carriers (22) running at right angles to the guides (23) in the calender uprights (5).

5. Calender according to claim 1 and 3, characterised in that the adjusting devices (24) acting parallel to the guide (8) for the bearing housings (6) of the outer roll (1) associated with the inner displaceable roll (2) are fixed in the calender uprights (5) and clamp the bearing housings (6) between them.

6. Calender according to claim 1, characterised in that the displaceable inner roll (2) is displaceable in sloping guides and in one of its end positions is adjustable in a vertical plane (11) running through the axis of the fixed inner roll (3), while the other rolls (1, 4) are displaceable in sloping planes running at an acute angle to the vertical.

7. Calender according to claim 1, characterised in that the calender can be used both for calendering a web-shaped product (14) in three roll gaps and also for doubling two webs of material and also for one-sided and two-sided coating or laminating of a web of material (9, 18) fed in and for frictioning fabrics.

8. Calender according to claim 1, characterised in that in their length the control members (24) for the roll traversing are designed not only for the roll traversing but also beyond that for a displacement movement of the roll (1) parallel with itself.

9. Calender according to claim 1, characterised in that the displacement possibility running parallel with the guide of the inner displaceable roll extends further than necessary for the traversing, namely also for an additional displacement of the roll parallel with itself, so that the distance between the inner adjustable roll and the inner fixed roll necessary for coating the web of material is adjustable.

10. Calender according to claim 9, characterised in that provision is made for an additional amount of movement at the adjustable inner roll for opening of the roll gap in an emergency.

## Revendications

1. Calandre dans les montants (5) de laquelle sont montés, les uns au-dessus des autres, avec un décalage mutuel, deux cylindres extérieurs (1, 4) et au moins deux cylindres intérieurs (2, 3), placés au milieu entre les deux cylindres extérieurs, dont les deux cylindres extérieurs peuvent être mis en biais ou sont inclinables par des moyens de réglage (24, 26) et sont déplaçables en translation par d'autres moyens de réglage (25, 27), et dont un cylindre intérieur (3) est monté rotatif en position fixe dans les montants (5) de la calandre, tandis que l'autre cylindre intérieur (2) est déplaçable en translation par des moyens de réglage pour ajuster l'écartement des cylindres, les corps de paliers (6) du cylindre intérieur mobile en translation étant déplaçables en translation dans des guides (8) réalisés à la façon de trous oblongs des montants de la calandre et les moyens de réglage attaquant les corps de paliers (6) des cylindres extérieurs (1, 4) - inclinables et déplaçables en translation - agissant suivant des directions mutuellement orthogonales,
caractérisée par l'orientation de la direction de translation du cylindre intérieur mobile (2) parallèlement à la direction de translation du cylindre extérieur (1) qui lui est coordonné et qui est mobile en translation et inclinable, ainsi que par la possibilité de translation de ce cylindre extérieur, allant au-delà de la possibilité d'inclinaison, sur au moins une distance nécessaire au revêtement de la bande de matière (9, 18) entre le cylindre intérieur (2) réglable et le cylindre intérieur (3) monté en position fixe.

2. Calandre selon la revendication 1, caractérisée par un dispositif de commande offrant deux possibilités de commande pour le déplacement en translation égal et de préférence également uniforme des deux corps de paliers (6) du cylindre extérieur (1) coordonné au cylindre intérieur mobile (2) : la possibilité de déplacer les deux corps de paliers (6) en translation, mais dans des sens contraires, sur des distances ou courses égales, ainsi que la possibilité de déplacer les deux corps de paliers (6) en translation dans le même sens, parallèlement et sur des courses égales.

3. Calandre selon la revendication 1, caractérisée en ce
que les guides (23), agencés dans les montants (5) de la calandre, pour les supports (22) des corps de paliers (6) du cylindre extérieur (1) voisin du cylindre intérieur (2) mobile en translation, sont perpendiculaires au guide (8) du cylindre intérieur (2) mobile, que la direction de translation de ce cylindre extérieur (1) pour l'inclinaison de celui-ci, est parallèle au guide (8) du cylindre intérieur mobile, les guides (7, 8) étant agencés sous un angle aigu par rapport à l'horizontale et la verticale, et que la possibilité de translation parallèlement au guide (8) du cylindre intérieur (2) mobile, est conçue pour aller au-delà de ce qui est nécessaire à l'inclinaison, à savoir pour permettre aussi une translation supplémentaire du cylindre parallèlement à lui-même, plus exactement dans une mesure telle que la distance nécessaire au revêtement de la bande de matière (9, 18) entre le cylindre intérieur (2) réglable et le cylindre intérieur (3) monté en position fixe soit ajustable.

4. Calandre selon les revendications 1 et 3, caractérisée en ce que les corps de paliers (6) du cylindre extérieur (1) inclinable et mobile en translation sont déplaçables en translation dans des guides (7) réalisés à la façon de trous oblongs de supports (22) qui sont eux-mêmes déplaçables en translation dans des guides (23), réalisés à la façon de trous oblongs, ménagés dans les montants (5) de la calandre, les guides (7) dans les supports (22) étant orientés perpendiculairement aux guides (23) dans les montants (5) de la calandre.

5. Calandre selon les revendications 1 et 3, caractérisée en ce que les dispositifs de réglage (24), agissant parallèlement au guide (8), pour les corps de paliers (6) du cylindre extérieur (1) coordonné au cylindre intérieur (2) mobile en translation, sont fixés dans les montants (5) de la calandre et enserrent les corps de paliers (6) entre eux.

6. Calandre selon la revendication 1, caractérisée en ce que le cylindre intérieur (2) mobile est déplaçable en translation dans des guides orientés obliquement et peut être positionné, dans l'une de ses positions de fin de course, dans un plan vertical (11) passant par l'axe du cylindre intérieur monté en position fixe, tandis que les cylindres extérieurs (1, 4) sont déplaçables en translation dans des plans formant un angle aigu avec la verticale.

7. Calandre selon la revendication 1, caractérisée en ce qu'elle est utilisable pour le calandrage d'un produit (14) en forme de bande en trois emprises ou fentes entre cylindres, pour le doublage (assemblage) de deux bandes, pour le revêtement ou le contrecollage d'un ou des deux côtés d'une bande de matière (9, 8) amenée, ainsi que pour la friction (le frictionnage) de tissus.

8. Calandre selon la revendication 1, caractérisée en ce que les dispositifs de réglage (24) pour l'inclinaison du cylindre ont une longueur prévue non seulement pour l'inclinaison du cylindre, mais aussi, en plus, pour un mouvement de translation du cylindre (1) parallèlement à lui-même.

9. Calandre selon la revendication 1, caractérisée en ce que la possibilité de translation parallèlement au guide du cylindre intérieur mobile, est conçue pour aller au-delà de ce qui est nécessaire à l'inclinaison, à savoir pour permettre aussi une translation supplémentaire du cylindre parallèlement à lui-même, plus exactement dans une mesure telle que la distance nécessaire au revêtement de la bande de matière entre le cylindre intérieur réglable et le cylindre intérieur monté en position fixe soit ajustable,

10. Calandre selon la revendication 9, caractérisée en ce qu'une course supplémentaire est prévue pour l'ouverture d'urgence de l'emprise du cylindre intérieur réglable.
